# EUROPÄISCHE PATENTSCHRIFT

(11) **EP 0 951 673 B1**
(45) Veröffentlichungstag und Bekanntmachung des Hinweises auf die Patenterteilung: **04.04.2001**
(21) Anmeldenummer: 98906810.1
(22) Anmeldetag: 15.01.1998
(51) Int. Cl.: G06F 9/42, G06F 12/14

(54) **VERFAHREN ZUR ÜBERWACHUNG DER VORGESCHRIEBENEN AUSFÜHRUNG VON SOFTWAREPROGRAMMEN**
METHOD FOR MONITORING THE EXECUTION OF SOFTWARE PROGRAMMES AS PRESCRIBED
PROCEDE DE CONTROLE DE L'EXECUTION DE PROGRAMMES LOGICIELS DETERMINES

(30) Priorität: 15.01.1997 DE 19701166
(43) Veröffentlichungstag der Anmeldung: 27.10.1999
(73) Patentinhaber: Infineon Technologies AG, 81669 München (DE)
(72) Erfinder: BALDISCHWEILER, Michael, D-81696 München (DE); PFAB, Stefan, D-82049 Gro hesselohe (DE)
(74) Vertreter: Zedlitz, Peter, Dipl.-Inf.
(86) Internationale Anmeldenummer: DE9800133
(87) Internationale Veröffentlichungsnummer: WO9832072

(56) Entgegenhaltungen:
- EP-A- 0 010 186
- EP-A- 0 011 136
- DE-A- 19 614 904
- US-A- 5 274 817
- UWE WILDNER: "Compiler assisted self-checking of structural integrity using return address hashing" PROCEEDING OF 2ND EUROPEAN DEPENDABLE COMPUTING CONFERENCE, EDCC-2, TAORMINA, ITALY, 2. - 4.Oktober 1996, ISBN 3-540-61772-8, 1996, BERLIN, SPRINGER-VERLAG, Seiten 161-177, XP002068242

## Beschreibung

Die vorliegende Erfindung betrifft ein Verfahren zur Überwachung der bestimmungsgemäßen Ausführung von Software-programmen gemäß dem Oberbegriff des Patentanspruchs 1. Ein solches Verfahren ist aus Uwe Wildner : "Compiler Assisted Self-Checking of Structural Integrity Using Return Address Hashing"; Proceeding of 2nd European Dependable Computing Conference, EDCC-2, Taormina, Italy, 2.-4.10.1996, Berlin, Springer-Verlag, Seiten 161-177, bekannt.
Daß Softwareprogramme bestimmungsgemäß ausgeführt werden, ist ein ständiges Ziel, dem man durch Vorsehen der unterschiedlichsten Maßnahmen immer näher kommt.

Während früher in erster Linie die unzuverlässige Hardware und Programmierfehler die Ursache für eine nicht ordnungsgemäße Softwareprogrammausführung waren, spielen mittlerweile gezielte Manipulationen des Programmablaufs eine immer bedeutender werdende Rolle.

Durch eine gezielte Manipulation von Programmabläufen ist es beispielsweise möglich, bestimmte Programmteile zu überspringen, wodurch beispielsweise die Zugangsberechtigung feststellende Überprüfungen umgangen werden können.

Dies kann beispielsweise, aber bei weitem nicht ausschließlich bei Chipkarten zu einem ernsthaften Problem werden, denn einerseits finden diese vor allem in sicherheitsrelevanten Bereichen (beispielsweise für Zutrittskontrollen, Geldgeschäfte etc.) eine immer weitere Verbreitung, und andererseits können sie, da sie naturgemäß.nicht unter ständiger Überwachung bzw. Aufsicht stehen können, ungehindert zum Gegenstand von Manipulationsversuchen gemacht werden.

Aufgrund der Vielzahl von bereits vorgesehenen Sicherheitsvorkehrungen ist die Wahrscheinlichkeit, daß eine für Miß-bräuche nutzbare Manipulation gelingt, sehr gering. Nichtsdestotrotz ist dies nicht gänzlich ausgeschlossen.

Der vorliegenden Erfindung liegt daher die Aufgabe zugrunde, ein Verfahren zur Überwachung der bestimmungsgemäßen Ausführung von Softwareprogrammen zu finden, durch welches insbesondere gezielte Manipulationen des Programmablaufs weitestgehend ausgeschlossen werden können.

Diese Aufgabe wird erfindungsgemäß durch die im Patentanspruch 1 beanspruchten Merkmale gelöst.

Die praktische Realisierung dieser Verfahrensschritte kann auf die verschiedenste Art und Weise erfolgen. Im einfachsten Fall werden bei einem eine Speicherung der Rücksprungadresse erfordernden Funktionsaufruf oder dergleichen nicht nur die Rücksprungadresse selbst, sondern zusätzliche Sicherungsinformationen gespeichert, welche erkennen lassen, ob die gespeicherte Rücksprungadresse noch benötigt wird und deshalb nicht überschrieben werden darf und/oder ob die gespeicherte Rücksprungadresse die ursprünglich gespeicherte bzw. zu speichernde Rücksprungadresse ist.

Beim erstgenannten Fall, d.h. bei der Realisierung eines Rücksprungadressen-Überschreibschutzes kann die Sicherungsinformation beispielsweise aus einer Schreibschutzkennung wie einem Schreibschutzbit oder dergleichen bestehen, welches beim Speichern einer Rücksprungadresse gesetzt und nach der Verwendung der gespeicherten Rücksprungadresse als Rücksprungadresse zurückgesetzt wird.

Beim zweitgenannten Fall, d.h. bei der Realisierung eines Rücksprungadressen-Verwendungsschutzes kann die Sicherungsinformation beispielsweise aus der Rücksprungadresse selbst oder aus die Rücksprungadresse in sonstiger Weise repräsentierenden oder charakterisierenden Daten bestehen.

Die genannten Sicherungsinformationen werden in einem Speicherbereich gespeichert, auf welchen vorzugsweise ein externer Zugriff nicht möglich ist; die "normale" Speicherung der Rücksprungadressen kann wie bisher im sogenannten Stack (Stapelspeicher) erfolgen.

Überprüft man vor jedem Schreibversuch auf den Stack, ob der zu beschreibende Bereich durch das Schreibschutzbit als ein schreibgeschützter Bereich ausgewiesen ist, so kann ein Überschreiben von später als Rücksprungadresse zu verwendenden Daten verhindert werden.

Überprüft man alternativ oder zusätzlich, ob als Rücksprungadresse zu verwendende Daten der ursprünglich gespeicherten oder zu speichernden Rücksprungadresse entsprechen, so kann verhindert werden, daß nach der Rücksprungadressenspeicherung veränderte (manipulierte) Daten als Rücksprungadresse verwendet werden.

In beiden Fällen können, um weitere Manipulationsversuche zu verhindern, das gerade ausgeführte Programm abgebrochen und/oder das das Programm ausführende System zurückgesetzt und/oder ein Alarm ausgelöst und/oder sicherheitsrelevante Daten gelöscht und/oder sonstige Schutzmaßnahmen ergriffen werden.

Auf diese Weise kann sichergestellt werden, daß gezielte Manipulationen von Rücksprungadressen nicht zu einer Veränderung des bestimmungsgemäßen Programmablaufs führen können.

Es wurde mithin ein Verfahren gefunden, durch welches insbesondere gezielte Manipulationen des Programmablaufs weitestgehend ausgeschlossen werden können.

Vorteilhafte Weiterbildungen der Erfindung sind Gegenstand der Unteransprüche.

Die Erfindung wird nachfolgend anhand von Ausführungsbeispielen unter Bezugnahme auf die Zeichnung näher erläutert. Es zeigen
- Figur 1: eine ausschnittsweise schematische Darstellung eines Systems zur Durchführung eines Rücksprungadressen-Verwendungsschutzes, und
- Figur 2: eine schematische Darstellung zur Veranschaulichung eines Rücksprungadressen-Überschreibschutzes und eines modifizierten Rücksprungadressen-Verwendungsschutzes.

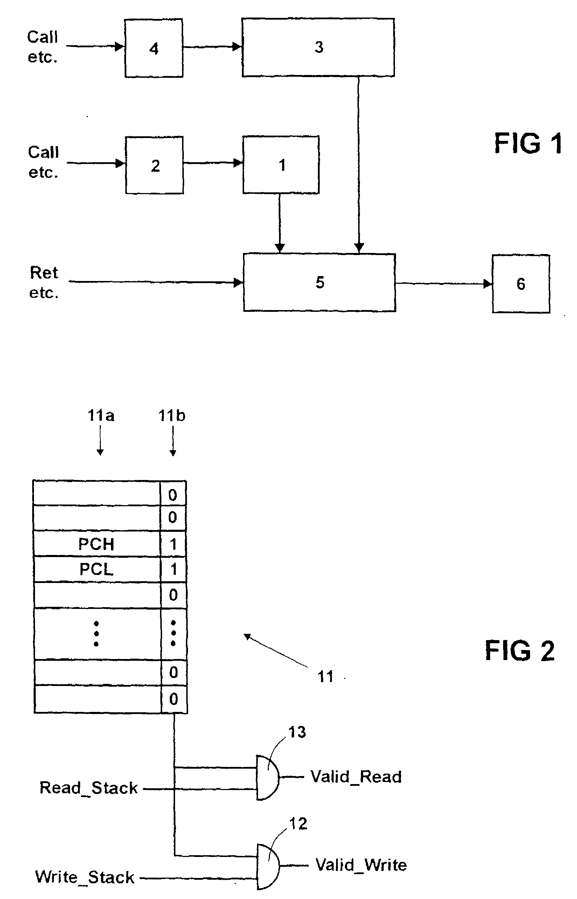

Das in der Figur 1 ausschnittsweise gezeigte System ist ein zur Ausführung von Softwareprogrammen ausgelegtes System, welches ganz oder teilweise in einem Mikroprozessor, einem Mikrocontroller, einem Signalprozessor oder dergleichen enthalten sein kann.

Der gezeigte Ausschnitt ist der für die Handhabung der Rücksprungadressen relevante Teil des Systems.

Rücksprungadressen sind beispielsweise zu speichern, wenn das auszuführende Programm einen Funktionsaufruf enthält. Bei einem Funktionsaufruf (beispielsweise beim Befehl LCALL beim Intel-Mikrocontroller 8051) wird
- innerhalb des Programmspeichers ein (Adreß-)Sprung zu der Stelle ausgeführt, an welcher das Programm für die nun auszuführende Funktion gespeichert ist,
- das betreffende Funktionsprogramm ausgeführt, und
- zu der Stelle im Programmspeicher zurückgekehrt, von wo aus der Sprung zum Funktionsprogramm erfolgt ist.

Die zuletzt genannte Adresse, d.h. die Adresse, an welcher die Programmausführung nach der Ausführung des Funktionsprogramms fortzusetzen ist, ist die besagte Rücksprungadresse.

Damit die das Softwareprogramm ausführende Einrichtung weiß, wohin sie nach der Ausführung der Funktion springen muß, bedarf es einer zwischenzeitlichen Speicherung der Rücksprungadresse.

Es sei bereits an dieser Stelle erwähnt, daß Funktionsaufrufe nicht die einzigen Ereignisse sind, bei denen die Speicherung der Rücksprungadresse erforderlich ist. Eine Rücksprungadressen-Speicherung ist, um nur einige Beispiele zu nennen, beispielsweise auch bei Interrupts (Programmunterbrechungen) oder bei Task-Wechseln in Multitasking-Betriebssystemen erforderlich.

Die Speicherung der Rücksprungadressen erfolgt üblicherweise in einem sogenannten Stack bzw. Stackspeicher (Stapelspeicher). Ein derartiger Stack ist in der Figur 1 mit dem Bezugszeichen 1 bezeichnet. Der Stack 1 wird von einer Stacklogik 2 angesteuert bzw. verwaltet. Die Stacklogik 2 erzeugt unter anderem einen sogenannten Stack-Pointer, welcher auf denjenigen Teilbereich des Stack 1 zeigt, welcher als nächster zu beschreiben oder auszulesen ist. Stacks an sich und das Arbeiten damit ist allgemein bekannt, so daß hier von einer weiteren Erläuterung abgesehen werden kann.

Im Stack 1 können nicht nur Rücksprungadressen, sondern auch beliebige andere Daten (Registerinhalte, lokale Variable etc.) gespeichert werden. Die vorliegenden Erläuterungen beziehen sich jedoch im wesentlichen ausschließlich auf die Handhabung von Rücksprungadressen.

Gilt es, wie beispielsweise im Fall eines LCALL-Befehls, eine Rücksprungadresse im Stack 1 zu speichern, so wird dies durch die Stacklogik 2 veranlaßt.

Anders als bei herkömmlichen Systemen wird beim vorliegend betrachteten System die im Stack 1 abgelegte bzw. abzulegende Rücksprungadresse zusätzlich als Sicherungsinformation in einem weiteren Speicher gespeichert. Dieser, nachfolgend als Sicherungsspeicher bezeichnete Speicher ist in der Figur 1 mit dem Bezugszeichen 3 bezeichnet. Dem Sicherungsspeicher 3 ist eine Sicherungsspeicherlogik 4 zugeordnet, über welche er ähnlich wie der Stack 1 durch die Stacklogik 2 angesteuert bzw. verwaltet wird.

Der Sicherungsspeicher 3 ist im Gegensatz zum Stack 1 von außerhalb des das Softwareprogramm ausführenden Systems nicht ansprechbar. D.h., dort eingeschriebene Daten können nicht oder jedenfalls nicht mit einem vertretbaren Aufwand gezielt manipuliert werden.

Die Sicherungsspeicherlogik 4 spricht im betrachteten Beispiel im Gegensatz zur Stacklogik 2 nur an, wenn eine Rücksprungadresse einzuschreiben oder auszulesen ist. Alternativ kann jedoch selbstverständlich auch vorgesehen werden, die Sicherungsspeicherlogik 4 auch auf andere Ereignisse (außer extern veranlaßte Schreib- und Lesevorgänge) ansprechen zu lassen.

Ist der Programmablauf an einem Punkt angelangt, an welchem ein Rücksprung zu einer zuvor gespeicherten Rücksprungadresse zu erfolgen hat, also beispielsweise bei einem RET-Befehl, so kann die benötigte Rücksprungadresse durch ein entsprechendes Auslesen des Stack 1 beschafft werden. Vor der Verwendung der dabei erhaltenen Daten als Rücksprungadresse wird jedoch überprüft, ob die erhaltenen Daten identisch mit der im Sicherungsspeicher 3 als Sicherungsinformation gespeicherten Rücksprungadresse sind.

Hierzu ist ein Vergleicher 5 vorgesehen, der die einander gegenüberzustellenden Daten aus dem Stack 1 und dem Sicherungsspeicher 3 entgegennimmt und einem Vergleich unterwirft.

Stellt sich bei dem im Vergleicher 5 durchgeführten Vergleich heraus, daß die einander gegenübergestellten Daten identisch sind, so bedeutet dies, daß die aus dem Stack 1 erhaltenen Daten der ursprünglich zu speichernden Rücksprungadresse entsprechen, also weder manipuliert noch infolge eines Hard- und/oder Softwarefehlers unrichtig oder an bzw. von der falschen Stelle abgespeichert bzw. ausgelesen wurden. Die im Stack 1 gespeicherten Daten können demnach als die ordnungsgemäße Rücksprungadresse angesehen und verwendet werden. Diese Schlußfolgerung ist deshalb möglich, weil, wie vorstehend bereits erwähnt wurde, eine gezielte Beeinflussung des Inhalts des Sicherungsspeichers 3 praktisch nicht möglich ist.

Stellt sich bei dem im Vergleicher 5 durchgeführten Vergleich hingegen heraus, daß die einander gegenübergestellten Daten nicht identisch sind, so bedeutet dies, daß die aus dem Stack 1 erhaltenen Daten mit hoher Wahrscheinlichkeit entweder manipuliert oder infolge eines Hard- und/oder Softwarefehlers unrichtig oder an bzw. von der falschen Stelle abgespeichert bzw. ausgelesen wurden. Unabhängig von der Ursache der nicht vorhandenen Identität können die im Stack 1 gespeicherten Daten nicht als Rücksprungadresse verwendet werden, da sich dadurch eine Abweichung vom bestimmungsgemäßen Programmablauf ergeben würde. Der Vergleicher 5 erzeugt in diesem Fall ein Signal NMI, welches einer NMI-Logik 6 zugeführt wird. Die NMI-Logik 6 veranlaßt einen sofortigen Programmabbruch und/ oder ein Zurücksetzen des das Softwareprogramm abarbeitenden Systems und/oder das Auslösen eines Alarms und/oder das Löschen von sicherheitsrelevanten Daten.

Der Vergleicher 5 wird im betrachteten Beispiel durch Befehle aktiviert, die, wie beispielsweise der RET-Befehl, ein Auslesen von als Rücksprungadresse zu interpretierenden Daten aus dem Stack 1 zur Folge haben. Zu allen anderen Zeiten ist der Vergleicher inaktiv.

Durch die beschriebenen Maßnahmen kann erreicht werden, daß das auszuführende Softwareprogramm nur ausgeführt werden kann, wenn und so lange kein wie auch immer zustande gekommener Rücksprungadressenfehler detektiert wird.

Das unter Bezugnahme auf die Figur 1 beschriebene Beispiel kann als praktische Realisierung eines bei Bedarf ansprechenden Rücksprungadressen-Verwendungsschutzes angesehen werden.

Obgleich dies nicht näher anhand von Beispielen beschrieben wird, ist es dabei nicht unbedingt erforderlich, daß die den jeweiligen Rücksprungadressen zugeordneten Sicherungsinformationen die Rücksprungadressen selbst sind. Alternativ kann vorgesehen werden, daß nur ausgewählte Teile der Rücksprungadresse oder die Rücksprungadresse auf beliebige andere Art und Weise repräsentierende oder charakterisierende Daten als Sicherungsinformation verwendet werden. Der Vergleicher 5 wäre dann gegebenenfalls natürlich durch eine entsprechend den gegebenen Umständen veränderte Gegenüberstellungseinrichtung zu ersetzen.

Eine alternative Realisierung der angestrebten Programmablaufüberwachung ist der nun unter Bezugnahme auf die Figur 2 beschriebene Rücksprungadressen-Überschreibschutz.

Die Figur 2 zeigt unter anderem einen Speicher 11, der sich in einen ersten Speicherbereich in Form eines Stack 11a und einen zweiten Speicherbereich in Form eines Sicherungsspeichers 11b unterteilen läßt.

Der Stack 11a entspricht dem in der Figur 1 gezeigten Stack 1. Der Sicherungsspeicher 11b entspricht in etwa dem in der Figur 1 gezeigten Sicherungsspeicher 3; allerdings wird der Sicherungsspeicher 11b mit anderen Sicherungsinformationen beschrieben als dies beim Sicherungsspeicher 3 der Fall ist.

Wie der Sicherungsspeicher 3 ist auch der Sicherungsspeicher 11b nicht von außerhalb der das zu überwachende Softwareprogramm ausführenden Einrichtung ansprechbar. D.h., daß auch bei dieser Variante der Programmablaufüberwachung im Sicherungsspeicher gespeicherte Informationen nicht oder jedenfalls nicht mit vertretbarem Aufwand manipulierbar sind.

Die in den Sicherungsspeicher 11b eingespeicherte Sicherungsinformation besteht aus einem Schreibschutzbit, das auf "1" gesetzt ist, wenn der Inhalt des zugeordneten Stackbereichs nicht überschrieben werden darf, und das auf "0" gesetzt ist, wenn der Inhalt des zugeordneten Stackbereichs überschrieben werden darf.

Gilt es, wie beispielsweise im Fall eines LCALL-Befehls, eine Rücksprungadresse im Stack 11a zu speichern, so wird dies in der üblichen Art und Weise veranlaßt.

Zugleich wird in den dem Stackbereich, in welchem die Rücksprungadresse eingeschrieben wurde, zugeordneten Bereich des Sicherungsspeichers 11b eine "1" eingeschrieben, um dadurch zu kennzeichnen, daß der entsprechende Stackbereich nicht überschrieben werden darf.

Im betrachteten Beispiel sei der Stack 11a in jeweils 8 Bits umfassende Bereiche unterteilt, wobei jedem der 8-Bit-Bereiche ein im Sicherungsspeicher llb gespeichertes Schreibschutzbit zugeordnet ist. Geht man davon aus, daß mit 16-Bit-Adressen gearbeitet wird, so werden zur Abspeicherung einer Rücksprungadresse zwei Stackbereiche benötigt.

Gemäß der Darstellung in der Figur 2 ist eine Rücksprungadresse im Stack 11a gespeichert. Die Rücksprungadresse setzt sich aus einem die höherwertigen acht Bits umfassenden Teil (PCH) und einem die niederwertigen acht Bits umfassenden Teil (PCL) zusammen. Sowohl dem PCH enthaltenden Stackbereich als auch dem PCL enthaltenden Stackbereich ist "1" als Sicherungsinformation bzw. Schreibschutzbit zugeordnet.

Die jeweiligen Sicherungsinformationen bzw. Schreibschutzbits werden auf "0" zurückgesetzt, wenn die im zugeordneten Stackbereich gespeicherten Daten als Rücksprungadresse verwendet wurden.

Vor jedem Versuch, Daten in den Stack zu schreiben (dort gespeicherte Daten zu überschreiben) wird die dem zu beschreibenden Stackbereich zugeordnete Sicherungsinformation (das zugeordnete Schreibschutzbit) ausgewertet, um festzustellen, ob das Beschreiben des Stack an dieser Stelle erlaubt ist.

Hat die zugeordnete Sicherungsinformation bzw. das zugeordnete Schreibschutzbit den Wert "1", so ist das Beschreiben des Stack an dieser Stelle nicht gestattet; der Schreibversuch wird als Manipulationsversuch oder Hard- oder Softwarefehler erkannt. Hat die zugeordnete Sicherungsinformation bzw. das zugeordnete Schreibschutzbit hingegen den Wert "0", so ist das Beschreiben des Stack an dieser Stelle zulässig.

Die Entscheidung über die Zulässigkeit des Beschreibens eines bestimmten Stackbereichs wird durch eine Schreibschutzüberprüfungsschaltung, welche im betrachteten Beispiel durch ein UND-Glied 12 realisiert ist, überprüft. An das UND-Glied 12 werden als Eingangssignale das dem zu beschreibenden Stackbereich zugeordnete Schreibschutzbit und ein den Schreibwunsch signalisierendes Signal Write_Stack verwendet, wobei Write_Stack den Wert "1" annehmen möge, wenn ein Schreibwunsch besteht, und wobei Write_Stack den Wert "0" annehmen möge, wenn kein Schreibwunsch besteht. Das Ausgangssignal Valid_Write des UND-Gliedes 12 zeigt dann an, ob das beabsichtigte Beschreiben des betreffenden Stackbereichs gestattet ist (Valid_Write = "0") oder ob es unzulässig ist (Valid_Write = "1"). Das Ausgangssignal Valid_Write des UND-Gliedes 12 kann wie das Ausgangssignal NMI des Vergleichers 5 in Figur 1 dazu verwendet werden, um das Programm sofort abzubrechen und/oder das das Programm abarbeitende System zurückzusetzen und/oder einen Alarm auszulösen und/oder sicherheitsrelevante Daten zu löschen.

Zusätzlich zu diesem Rücksprungadressen-Überschreibschutz kann ein gegenüber der Ausführung gemäß der Figur 1 modifizierter Rücksprungadressen-Verwendungsschutz in das System nach Figur 2 integriert werden. Dieser zusätzliche Schutzmechanismus besteht darin, daß aus dem Stack 11a gelesene Daten vor deren Verwendung als Rücksprungadresse daraufhin überprüft werden, ob sie überhaupt eine Rücksprungadresse repräsentieren. Dies kann an den den jeweiligen Stackbereichen zugeordneten Sicherungsinformationen bzw. Schreibschutzbits ersehen werden. Nur wenn die dem auszulesenden Stackbereich zugeordneten Sicherungsinformationen bzw. Schreibschutzbits den Wert "1" haben, repräsentieren die im entsprechenden Stackbereich gespeicherten Daten eine Rücksprungadresse. Voraussetzung hierfür ist dann natürlich, daß die Sicherungsinformationen bzw. Schreibschutzbits ausschließlich für Rücksprungadressen repräsentierende Daten, also beispielsweise im Anschluß an einen CALL-Befehl oder dergleichen in den Stack 11a geschriebene Daten auf "1" gesetzt werden.

Dieser zusätzliche Schutzmechanismus ist gemäß der Darstellung in der Figur 2 durch ein UND-Glied 13 realisiert. An das UND-Glied 13 werden als Eingangssignale das dem auszulesenden Stackbereich zugeordnete Schreibschutzbit und ein den Verwendungszweck der gelesenen Daten signalisierendes Signal Read_Stack verwendet, wobei Read_Stack den Wert "1" annehmen möge, wenn, wie beispielsweise beim Vorliegen eines RET-Befehls eine Verwendung als Rücksprungadresse beabsichtigt ist, und wobei Read_Stack den Wert "0" annehmen möge, wenn eine anderweitige Verwendung beabsichtigt ist. Das Ausgangssignal Valid_Read des UND-Gliedes 13 zeigt dann an, ob die Verwendung der angeforderten Daten als Rücksprungadresse gestattet ist (Valid_Read = "1") oder ob sie unzulässig ist (Valid_Read = "0"). Tritt bei einer Rücksprungadressenanforderung der Fall auf, daß die Verwendung der aus dem Stack 11a angeforderten Daten als Rücksprungadresse durch Valid_Read = "0" als unzulässig einzustufen ist, so kann dies als Manipulationsversuch oder als Hard- oder Softwarefehler interpretiert werden und zum Anlaß für die Einleitung geeigneter Schutzmaßnahmen genommen werden. Diese Maßnahmen können insbesondere in einem sofortigen Programmabbruch und/oder einem Zurücksetzen des das Softwareprogramm abarbeitenden Systems und/oder dem Auslösen eines Alarms und/oder dem Löschen von sicherheitsrelevanten Daten bestehen.

Gemäß der vorstehenden Beschreibung bestehen die vor einem externen Zugriff geschützten Sicherungsinformationen aus einem Schreibschutzbit. Es versteht sich von selbst, daß statt dessen eine aus beliebig vielen und beliebige Bedeutung aufweisende Bits bestehende Kennung verwendet werden kann, durch die nicht nur Rücksprungadressen, sondern auch beliebige andere schützenswerte Daten einer Sonderbehandlung zum Schutz derselben vor Manipulation und Fehlern unterziehbar sind.

Der Sicherungsspeicher, in welchem die verschiedenen Sicherungsinformationen gespeichert werden, ist, wie vorstehend bereits mehrfach erwähnt wurde, ein extern nicht gezielt ansprechbarer Speicher. Er ist vorzugsweise in der das zu überwachende Softwareprogramm ausführenden Einrichtung, also in der Regel einem Mikroprozessor, einem Mikrocontroller oder einem Signalprozessor selbst untergebracht; dort ist er gegen Zugriffe von außen besonders gut geschützt. Die Realisierung eines von außen nicht ansprechbaren Speichers innerhalb eines Mikroprozessors, eines Mikrocontrollers oder eines Signalprozessors (z.B. in Form eines hidden bzw. shadow stack) ist relativ einfach möglich. Hierzu bedarf es lediglich einer entsprechenden Modifizierung der Kernel-Software.

Der Einsatz eines der vorstehend beschriebenen Verfahren erfordert keine darüber hinausgehenden Änderungen in der Hardware und der Software. Insbesondere kann der Stack wie bisher weiterverwendet werden.

Es wurde mithin ein Verfahren zur Überwachung der bestimmungsgemäßen Ausführung von Softwareprogrammen gefunden, durch welches auf einfache Weise und ohne Softwareänderungen insbesondere gezielte Manipulationen des Programmablaufs, aber teilweise auch Hard- und Softwarefehler weitestgehend ausgeschlossen werden können.

## Patentansprüche

1. Verfahren zur Überwachung der bestimmungsgemäßen Ausführung von Softwareprogrammen, bei welchem das Überschreiben von zur späteren Verwendung gespeicherten Rücksprungadressen und/oder die Verwendung von fehlerhaft gespeicherten oder überschriebenen Rücksprungadressen als Rücksprungadresse verhindert werden,
**dadurch gekennzeichnet**,
daß der Rücksprungadressen-Überschreibschutz und der Rücksprungadressen-Verwendungsschutz unter Auswertung von Sicherungsinformationen erfolgen, welche beim Speichern der Rücksprungadressen generiert und in einen Sicherungsspeicher eingespeichert werden, und daß als Sicherungsspeicher ein von außerhalb des das zu überwachende Softwareprogramm ausführenden Systems nicht gezielt ansprechbarer Speicher verwendet wird.

2. Verfahren nach Anspruch 1,
**dadurch gekennzeichnet**,
daß als Sicherungsspeicher ein in einem das Softwareprogramm ausführenden Mikroprozessor, Mikrocontroller oder Signalprozessor vorgesehener Speicher verwendet wird.

3. Verfahren nach Anspruch 1 oder 2,
**dadurch gekennzeichnet**,
daß als Sicherungsinformation die Rücksprungadresse selbst oder diese repräsentierende oder charakterisierende Daten verwendet werden.

4. Verfahren nach Anspruch 3,
**dadurch gekennzeichnet**,
daß gespeicherte Daten vor deren Verwendung als Rücksprung- adresse der zugeordneten Sicherungsinformation gegenübergestellt werden, wobei die Verwendung der Daten als Rücksprungadresse nur zugelassen wird, wenn festgestellt wird, daß die Sicherungsinformation die gespeicherten Daten repräsentieren oder charakterisieren.

5. Verfahren nach Anspruch 3 oder 4,
**dadurch gekennzeichnet**,
daß dann, wenn bei einer Anforderung von eine Rücksprungadresse repräsentierenden Daten festgestellt wird, daß die Sicherungsinformation die im Ansprechen auf die Anforderung erhaltenen Daten nicht repräsentiert oder charakterisiert, ein sofortiger Programmabbruch und/oder ein Zurücksetzen des das Softwareprogramm abarbeitenden Systems und/oder ein Auslösen eines Alarms und/oder ein Löschen von sicherheitsrelevanten Daten veranlaßt wird.

6. Verfahren nach Anspruch 1 oder 2,
**dadurch gekennzeichnet**,
daß als Sicherungsinformation einen Schreibschutz signalisierende Schreibschutzkennungen gespeichert werden.

7. Verfahren nach Anspruch 6,
**dadurch gekennzeichnet**,
daß ein Überschreiben von Speicherbereichen, für die die Schreibschutzkennungen einen Schreibschutz signalisieren, unterbunden wird.

8. Verfahren nach Anspruch 6 oder 7,
**dadurch gekennzeichnet**,
daß dann, wenn beim Versuch des Überschreibens eines Speicherbereichs festgestellt wird, daß die zugeordnete Sicherungsinformation einen Schreibschutz signalisiert, ein sofortiger Programmabbruch und/oder ein Zurücksetzen des das Softwareprogramm abarbeitenden Systems und/oder ein Auslösen eines Alarms und/oder ein Löschen von sicherheitsrelevanten Daten veranlaßt wird.

9. Verfahren nach einem der Ansprüche 6 bis 8,
**dadurch gekennzeichnet**,
daß vor der Verwendung gespeicherter Daten als Rücksprungadresse die zugeordnete Sicherungsinformation abgefragt wird, wobei die Verwendung der Daten als Rücksprungadresse nur zugelassen wird, wenn festgestellt wird, daß die Sicherungsinformation einen Schreibschutz signalisiert.

10. Verfahren nach Anspruch 9,
**dadurch gekennzeichnet**,
daß dann, wenn bei einer Anforderung von eine Rücksprungadresse repräsentierenden Daten festgestellt wird, daß die zugeordnete Sicherungsinformation keinen Schreibschutz signalisiert, ein sofortiger Programmabbruch und/oder ein Zurücksetzen des das Softwareprogramm abarbeitenden Systems und/oder ein Auslösen eines Alarms und/oder ein Löschen von. sicherheitsrelevanten Daten veranlaßt wird.

## Claims

1. Method for monitoring the correct execution of software programs, in which the overwriting of jump-back addresses which are stored for subsequent use and/or the use of incorrectly stored or overwritten jump-back addresses as a jump-back address are/is prevented,
characterized
in that the jump-back address overwrite protection and the jump-back address use protection are provided by evaluation of protection information which is generated during storage of the jump-back addresses and is stored in a protection memory, and in that a memory which can be addressed in a non-specific manner from outside the system which executes the software program to be monitored is used as the protection memory.

2. Method according to Claim 1,
characterized
in that a memory which is provided in a microprocessor, microcontroller or signal processor which executes the software program is used as the protection memory.

3. Method according to Claim 1 or 2,
characterized
in that the jump-back address itself or data representing or characterizing it is or are used as protection information.

4. Method according to Claim 3,
characterized
in that, before stored data are used as a jump-back address, they are compared with associated protection information, with the use of the data as a jump-back address being permitted only if it is found that the stored data represent or characterize the protection information.

5. Method according to Claim 3 or 4,
characterized
in that, if it is found in the event of a request for data which represent a jump-back address that the protection information does not represent or characterize the data contained in the response to the request, an immediate program termination and/or resetting of the system processing the software program and/or triggering of an alarm and/or deletion of protection-relevant data are/is initiated.

6. Method according to Claim 1 or 2,
characterized
in that write protection identifiers which signal write protection are stored as protection information.

7. Method according to Claim 6,
characterized
in that overwriting of memory areas for which the write protection identifiers signal write protection is prevented.

8. Method according to Claim 6 or 7,
characterized
in that, if it is found during an attempt to overwrite a memory area that the associated protection information signals write protection, an immediate program termination and/or resetting of the system processing the software program and/or triggering of an alarm and/or deletion of protection-relevant data are/is initiated.

9. Method according to one of Claims 6 to 8,
characterized
in that, before stored data are used as a jump-back address, the associated protection information is checked, with the use of the data as a jump-back address being permitted only if it is found that the protection information signals write protection.

10. Method according to Claim 9,
characterized in that, if it is found in the event of a request for data which represent a jump-back address that the associated protection information does not signal write protection, an immediate program termination and/or resetting of the system processing the software program and/or triggering of an alarm and/or deletion of protection-relevant data are/is initiated.

## Revendications

1. Procédé pour surveiller l'exécution conforme de programmes logiciels, dans lequel on empêche l'écrasement d'adresses de retour mémorisées pour une utilisation ultérieure et/ou l'utilisation d'adresses de retour mémorisées de façon erronée ou écrasées comme adresse de retour, caractérisé en ce que la protection contre l'écrasement d'adresses de retour et la protection contre l'utilisation d'adresses de retour se fait par exploitation d'informations de sécurité, lesquelles sont générées lors de la mémorisation des adresses de retour et rangées dans une mémoire de sauvegarde, et en ce que l'on utilise comme mémoire de sauvegarde une mémoire qui ne peut pas être adressée de manière ciblée de l'extérieur du système exécutant le programme logiciel à contrôler.

2. Procédé selon la revendication 1, caractérisé en ce que l'on utilise comme mémoire de sauvegarde une mémoire prévue dans un microprocesseur, microcontrôleur ou processeur de signaux exécutant le programme logiciel.

3. Procédé selon la revendication 1 ou 2, caractérisé en ce que l'on utilise comme information de sécurité l'adresse de retour elle-même ou des données qui représentent ou caractérisent celle-ci.

4. Procédé selon la revendication 3, caractérisé en ce que les données mémorisées sont confrontées à l'information de sécurité associée avant leur utilisation comme adresse de retour, l'utilisation des données comme adresse de retour n'étant autorisée que lorsqu'il est constaté que l'information de sécurité représente ou caractérise les données mémorisées.

5. Procédé selon la revendication 3 ou 4, caractérisé en ce qu'un arrêt immédiat du programme et/ou une réinitialisation du système exécutant le programme logiciel et/ou un déclenchement d'alarme et/ou un effacement de données pertinentes pour la sécurité sont ordonnés lorsqu'en appelant des données représentant une adresse de retour il est constaté que l'information de sécurité ne représente pas ou ne caractérise pas les données obtenues lors de la réponse à l'appel.

6. Procédé selon la revendication 1 ou 2, caractérisé en ce qu'on mémorise comme information de sécurité des identificateurs de protection d'écriture, qui signalent une protection d'écriture.

7. Procédé selon la revendication 6, caractérisé en ce qu'un écrasement de zones de mémoire, pour lesquelles les identificateurs de protection d'écriture signalent une protection d'écriture, est empêché.

8. Procédé selon la revendication 6 ou 7, caractérisé en ce qu'un arrêt immédiat du programme et/ou une réinitialisation du système exécutant le programme logiciel et/ou un déclenchement d'alarme et/ou un effacement de données pertinentes pour la sécurité sont ordonnés lorsque lors de la tentative pour écraser une zone de mémoire il est constaté que l'information de sécurité associée signale une protection d'écriture.

9. Procédé selon l'une des revendications 6 à 8, caractérisé en ce que l'information de sécurité est interrogée avant d'utiliser des données mémorisées comme adresse de retour, l'utilisation des données comme adresse de retour n'étant autorisée que lorsqu'il est constaté que l'information de sécurité signale une protection d'écriture.

10. Procédé selon la revendication 9, caractérisé en ce qu'un arrêt immédiat du programme et/ou une réinitialisation du système exécutant le programme logiciel et/ou un déclenchement d'alarme et/ou un effacement de données pertinentes pour la sécurité sont ordonnés lorsque lors d'un appel de données représentant une adresse de retour il est constaté que l'information de sécurité associée ne signale pas de protection d'écriture.
